# EUROPEAN PATENT SPECIFICATION

(11) **EP 3 101 351 B1**
(45) Date of publication and mention of the grant of the patent: **06.03.2019**
(21) Application number: 15742724.6
(22) Date of filing: 29.01.2015
(51) Int. Cl.: F24D 3/18, F24F 5/00, F24D 15/04, F25B 13/00, F24D 19/10

(54) **TEMPERATURE REGULATION SYSTEM**
TEMPERATURREGELUNGSSYSTEM
SYSTÈME DE RÉGULATION DE TEMPÉRATURE

(30) Priority: 31.01.2014 JP 2014017558
(43) Date of publication of application: 07.12.2016
(73) Proprietor: Daikin Industries, Ltd., Osaka-shi, Osaka 530-8323 (JP)
(72) Inventor: YOSHIKAWA, Shinji, Osaka-shi Osaka 530-8323 (JP); HIROSE, Junichi, Osaka-shi Osaka 530-8323 (JP); NISHIDA, Teruo, Osaka-shi Osaka 530-8323 (JP)
(74) Representative: Hoffmann Eitle
(86) International application number: PCT/JP2015/052557
(87) International publication number: WO 2015/115560

(56) References cited:
- JP-A- 2000 266 359
- JP-A- 2001 336 787
- JP-A- 2003 322 347
- JP-A- 2004 205 200
- JP-A- 2008 123 649
- JP-A- 2012 189 250
- JP-A- 2013 108 651

## Description

### TECHNICAL FIELD

The present invention relates to a temperature regulation system that carries out temperature regulation by supplying heating medium for objects of the temperature regulation.

### BACKGROUND ART

A hot water supply and heating apparatus disclosed in JP 2005-37019 A is a temperature regulation system that carries out temperature regulation by supplying heating medium for radiators provided in rooms and/or under floors. In the conventional hot water supply and heating apparatus, water is heated by heat exchange in a hot water supply heat exchanger for heat of combustion gas in a hot water supply burner. Connection ports are provided therein for supplying the produced hot water for a plurality of floor heating appliances installed in a building outside.

In the hot water supply and heating apparatus, supply of the hot water produced by the hot water supply heat exchanger to the floor heating appliances is commonly effected and stopped by a plurality of thermal valves provided in the hot water supply and heating apparatus in accordance with a number of the connection ports.

The conventional hot water supply and heating apparatus disclosed in JP 2005-37019 A, however, has problems as follows.

The plurality of thermal valves that effect and stop the supply of the hot water produced by the hot water supply heat exchanger to the plurality of floor heating appliances are installed in the hot water supply and heating apparatus installed outdoors. Therefore, connection between the plurality of thermal valves installed on the outdoor hot water supply and heating apparatus and the indoor floor heating appliances has to be made by construction of a plurality of long pipes. A plurality of holes through which the plurality of pipes are to be respectively passed or a large hole through which the plurality of pipes are collectively passed has to be pierced in a wall of a house. Thus poor workability and increased costs make the problems.

Temperature regulation systems as the following are conceivable in order to solve such a problem in the workability.

First, a temperature regulation system is conceivable in which a hot water unit is provided separately from a heat source unit and in which a plurality of thermal valves are provided in the hot water unit. The temperature regulation system in which the hot water unit and the heat source unit are installed outdoors has problems similar to those of the hot water supply and heating apparatus disclosed in JP 2005-37019 A. Furthermore, the temperature regulation system in which only the hot water unit is installed indoors solves the problem in the workability but newly causes such problems as ensuring of an indoor space for installation of the hot water unit and noise control for pumps.

Secondly, a temperature regulation system is conceivable in which a heat source unit having a hot water unit built in and having a hot water unit controller is installed outdoors and in which a header unit having a plurality of thermal valves and a controller dedicated to the thermal valves is installed indoors. Thirdly, a temperature regulation system is conceivable in which a heat source unit having a hot water unit built in and having a hot water unit controller is installed outdoors and in which a plurality of thermal valves installed indoors are controlled by a dedicated controller installed indoors. The temperature regulation systems are required to be newly equipped with the controller dedicated to the thermal valves only for control over operation of above-mentioned thermal motor-actuated valves and communication and thus have a problem of cost increase.

JP2001336787 (A) discloses a temperature regulation system according to the preamble of claim 1 and describes a temperature-controlling device that reduces manufacturing costs and execution costs and can be installed easily. This floor temperature-controlling device is provided with a floor temperature-controlling panel, a temperature control water unit, and an outdoor machine. The temperature control water unit is composed of an expansion tank, a circulation pump, a heat exchange path, and a heat exchanger that is attached to the heat exchange path. The outdoor machine composes a heat-pump-type air conditioner, and can connect a plurality of indoor units. A top board can be attached to or detached from a casing of the outdoor machine, the temperature control water unit can be placed at the upper portion of the casing where the top board is removed, and further the top board can be fitted to the upper portion of the temperature control water unit.

### SUMMARY OF INVENTION

### Technical Problem

An object of the invention is to provide a temperature regulation system by which workability can be improved and which is inexpensive.

### Solution to Problem

In order to achieve the object, a temperature regulation system of the invention comprises:
a water unit that is configured to produce hot water or cold water and that includes a controller,
headers that are connected to the water unit through water pipes that are configured to guide the hot water or the cold water produced by the water unit to specified supply destinations and that are configured to guide return water produced in the specified supply destinations to the water unit, and
a plurality of thermal valves that are connected to the header,
wherein the water unit is placed opposite to the headers with respect to walls for forming rooms in a building, and
wherein the controller is connected to the thermal valves through communication lines and is configured to controls opening-closing operations of the thermal valves.

The term "walls" therein encompasses walls provided between the rooms inside the building and a space outside the building, walls provided between the rooms inside the building and a space inside a garage or inside a warehouse, or the like, for instance.

In an above configuration in which the water unit that produces the hot water or the cold water is placed opposite to the headers having the plurality of thermal valves connected thereto with respect to the walls for forming the rooms in the building, the water pipes that guide the hot water or the cold water produced by the water unit to the specified supply destinations and that guide the return water produced in the specified supply destinations to the water unit may be two water pipes that make connection of a supply water port and a return water port of the water unit to connection ports of the headers.

In construction of the water unit, therefore, holes through which the two water pipes are to be passed have only to be pierced in the walls interposed between the water unit and the headers, so that improvement in workability and reduction in costs can be attained. Additionally, appearance of the walls can be improved.

Furthermore, the controller that is provided in the water unit and that controls the opening-closing operations of the thermal valves is connected to the thermal valves through the communication lines. Thus necessity of provision of a controller dedicated to the thermal valves is eliminated and reduction in costs can be pursued accordingly.

Further, in the above temperature regulation system,
the water unit is installed outdoors or outside the rooms and the headers and the plurality of thermal valves are installed indoors.

Accordingly, the water unit is installed outdoors while the headers and the plurality of thermal valves are installed indoors. Therefore, an exterior wall of the building is included in the walls interposed between the water unit and the headers.

Quality of impressions of a house is dependent on exterior walls of the building thereof. Accordingly, the impressions of the house are degraded by an exterior wall of the building having a plurality of holes or a large hole through which a plurality of pipes are to be passed.

Accordingly, the holes through which the two water pipes are to be passed have only to be pierced in the exterior wall of the building in the construction of the water unit and the headers, so that the reduction in the costs can be pursued and so that prevention of degradation in the impressions of the house with substantial improvement in the appearance of the building can be attained.

Further, the above temperature regulation system further comprises
a relay terminal that is provided in a header unit including the headers and the thermal valves and that intermediates the communication lines,
wherein the communication lines are made of header-unit outside communication lines that are mainly placed outside the header unit and header-unit inside communication lines that are placed inside the header unit, and
wherein the header-unit outside communication lines are connected to the header-unit inside communication lines through the relay terminal.

Accordingly, the communication lines that make connection between the controller and the thermal valves are configured by connection between the header-unit outside communication lines and the header-unit inside communication lines through the relay terminal provided in the header unit. Provided that the relay terminal and the thermal valves are connected in advance through the header-unit-inside communication lines, therefore, there is no need to directly connect the header-unit-outside communication lines to the thermal valves in the construction of the water unit, so that the workability can further be improved.

A temperature regulation system in accordance with an embodiment further comprises
mechanical relays connected to the communication lines.

According to the embodiment, the mechanical relays that resist generating noises are used rather than semiconductor relays that are prone to generate noises as relays to be connected to the communication lines and thus reduction in the noises can be pursued even if the communication lines have a long total length between 5 m and 20 m.

In a temperature regulation system in accordance with an embodiment,
the headers and the plurality of thermal valves are installed under indoor floors.

According to the embodiment in which the headers and the plurality of thermal valves are installed under the floors where the floor cooling/heating panels connected to the headers and the thermal valves are installed, inside of the rooms can be made neat by shortening of piping for connection of the headers and the thermal valves to the floor cooling/heating panels and elimination of the header unit from the inside of the rooms.

A temperature regulation system in accordance with an embodiment further comprises
a heat source unit that is configured to produce heating medium having a high temperature or heating medium having a low temperature and that is configured to supply the heating medium to the water unit,
wherein the water unit is configured integrally with the heat source unit.

According to the embodiment, necessity of plumbing and cabling work between the heat source unit and the water unit is removed and thus further improvement in the workability can be pursued.

### Advantageous Effects of Invention

In the temperature regulation system of the invention, as apparent from above, the water unit that produces the hot water or the cold water is placed opposite to the headers having the plurality of thermal valves connected thereto with respect to the walls. Therefore, the water pipes that guide the hot water or the cold water produced by the water unit and the produced return water may be made of the two water pipes that make the connection of the supply water port and the return water port of the water unit to the connection ports of the headers.

According to the invention, consequently, a number of the pipes that are installed between the water unit and the walls in the construction of the water unit can be reduced. Additionally, the holes through which the two water pipes are to be passed have only to be pierced in the walls interposed between the water unit and the headers. Thus the improvement in the workability and the reduction in the costs can be attained. Furthermore, the appearance of the walls can substantially be improved.

### BRIEF DESCRIPTION OF DRAWINGS

Fig. 1 is a representation illustrating a schematic configuration of a temperature regulation system in accordance with the invention;
Fig. 2 is a representation illustrating an overall configuration of a water unit in Fig. 1; and
Fig. 3 is a representation illustrating a schematic configuration of a temperature regulation system that is different from the temperature regulation system of Fig. 1.

### DESCRIPTION OF EMBODIMENTS

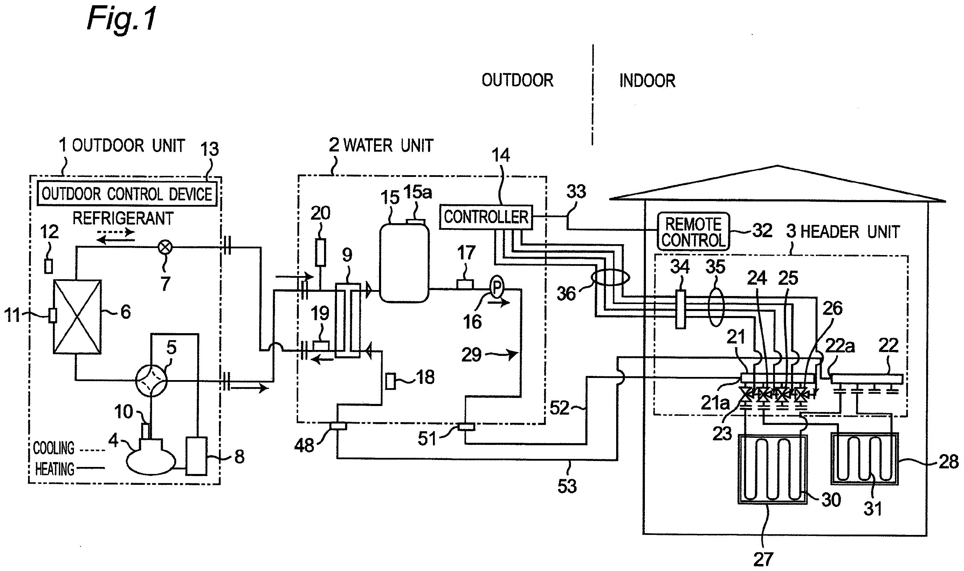

Hereinbelow, the invention will be described in detail with reference to embodiments shown in the drawings. Fig. 1 is a representation illustrating a schematic configuration of a temperature regulation system in accordance with the embodiment.

The temperature regulation system includes an outdoor unit 1, a water unit 2 connected to the outdoor unit 1, and a header unit 3 connected to the water unit 2. The outdoor unit 1 and the water unit 2 are installed outdoors, while the header unit 3 is installed indoors.

The outdoor unit 1 includes a compressor 4, a four-way valve 5, an outdoor heat exchanger 6, an electric expansion valve 7, and an accumulator 8. One end side of the outdoor heat exchanger 6 is connected to one end side of the electric expansion valve 7. In heating operation, switching of the four-way valve 5 causes a suction side of the compressor 4 to be connected to the other end side of the outdoor heat exchanger 6 and causes a discharge side of the compressor 4 to be connected to one end side of a plate-type water heat exchanger 9. In cooling operation, the suction side of the compressor 4 is connected to the one end side of the plate-type water heat exchanger 9 and the discharge side of the compressor 4 is connected to the other end side of the outdoor heat exchanger 6.

The outdoor unit 1 includes first through third temperature sensors 10 through 12 that are made of thermistors, for instance, and an outdoor control device 13 that receives signals indicating temperatures detected by the first through third temperature sensors 10 through 12.

The first temperature sensor 10 detects the temperature of refrigerant as the heating medium between the compressor 4 and the four-way valve 5. The second temperature sensor 11 is attached to the outdoor heat exchanger 6 and detects the temperature of the refrigerant in the outdoor heat exchanger 6. The third temperature sensor 12 is placed adjacent to the outdoor heat exchanger 6 and detects the temperature of outside air.

Based on detected values from the temperature sensors 10 through 12, the outdoor control device 13 controls an inverter (not illustrated) of the compressor 4 and an opening of the electric expansion valve 7 so that a heat exchange efficiency of the plate-type water heat exchanger 9 is optimized. The outdoor control device 13 is connected to a controller 14 of the water unit 2 through signal lines not illustrated.

The outdoor heat exchanger 6, the compressor 4, the plate-type water heat exchanger 9, and the electric expansion valve 7 are connected in order of mention so as to form a refrigerant circuit.

The water unit 2 is installed outdoors and includes the plate-type water heat exchanger 9, an expansion tank 15, and a circulation pump 16.

The plate-type water heat exchanger 9 functions as a condenser or an evaporator for the refrigerant circuit. A channel through which the refrigerant from the outdoor unit 1 flows and a channel through which return water from floor cooling/heating panels 27, 28 installed indoors flows are provided in the plate-type water heat exchanger 9. A positive and negative pressure valve is attached to the expansion tank 15 and hot water or cold water from the plate-type water heat exchanger 9 is accumulated in the expansion tank 15. A water supply port 15a is provided on a top part of the expansion tank 15 so that the expansion tank 15 can be replenished with water through the water supply port 15a when the water is required. The floor cooling/heating panels 27, 28 are an example of the specified supply destinations.

A suction side of the circulation pump 16 is connected to the expansion tank 15 and a discharge side of the circulation pump 16 is connected to a supply header 21 in the header unit 3. Thus the circulation pump 16 is capable of delivering the hot water or the cold water, having undergone heat exchange with the refrigerant passing through the plate-type water heat exchanger 9, to the floor cooling/heating panels 27, 28 connected to the supply header 21.

The water unit 2 includes first, second water temperature sensors 17, 18 each made of a thermistor, for instance, a refrigerant temperature sensor 19 made of a thermistor, for instance, a pressure sensor 20, and the controller 14.

The first water temperature sensor 17 detects a temperature of the hot water or the cold water flowing from the plate-type water heat exchanger 9 toward the floor cooling/heating panels 27, 28. The second water temperature sensor 18 detects a temperature of the hot water or the cold water flowing from the floor cooling/heating panels 27, 28 toward the plate-type water heat exchanger 9. The refrigerant temperature sensor 19 detects a temperature of the refrigerant between the electric expansion valve 7 and the plate-type water heat exchanger 9. The pressure sensor 20 is placed adjacent to the plate-type water heat exchanger 9, detects a pressure of the refrigerant between the four-way valve 5 and the plate-type water heat exchanger 9, and transmits signals indicating the pressure to the controller 14.

The controller 14 transmits signals, indicating setting temperatures for the floor cooling/heating panels 27, 28, or the like to the outdoor control device 13. The controller 14 controls the circulation pump 16, first through fourth thermal valves 23 through 26, and the like based on designation signals from the outdoor control device 13, the temperatures of the hot water or the cold water detected by the first, second water temperature sensors 17, 18, and/or the like.

The header unit 3 is installed indoors and includes the supply header 21 and a return header 22. One end of each of the first through fourth thermal valves 23 through 26 is connected to the supply header 21. Water inlets of the first and second floor cooling/heating panels 27 and 28 are respectively connected to the other ends of the first and second thermal valves 23 and 24. Water outlets of the first and second floor cooling/heating panels 27 and 28 are connected to the return header 22. Thus the hot water or the cold water in the first and second floor cooling/heating panels 27 and 28 is allowed to return to the water unit 2 so that the water is allowed to circulate through a water circuit 29.

The first and second floor cooling/heating panels 27 and 28 respectively include water circulation pipes 30 and 31 that are each formed in a meandering shape and that are supplied with the hot water or the cold water from the plate-type water heat exchanger 9.

A remote control 32 for setting of the temperatures of the first and second floor cooling/heating panels 27, 28 and the like is provided indoors and connection between the remote control 32 and the controller 14 of the water unit 2 is made by a communication line 33.

Connection between the controller 14 in the water unit 2 and the first through fourth thermal valves 23 through 26 in the header unit 3 is made by communication lines to which double insulation or reinforced insulation is applied. A relay terminal 34 is provided in a header box (not illustrated) that is placed in the header unit 3 and that houses the supply header 21, the return header 22, and the first through fourth thermal valves 23 through 26 and connection between four internal terminals (not illustrated) in the relay terminal 34 and drive units for the first through fourth thermal valves 23 through 26 is made by header-unit-inside communication lines 35. Connection between the internal terminals in the relay terminal 34 and the controller 14 of the water unit 2 is made by header-unit-outside communication lines 36.

Providing that the connection between the relay terminal 34 and the drive units for the first through fourth thermal valves 23 through 26 that are provided in the header box is made in advance by the header-unit-inside communication lines 35 in such a configuration, there is no need to directly connect the header-unit-outside communication lines 36 to the drive units for the first through fourth thermal valves 23 through 26 in construction of the outdoor unit 1 and the water unit 2, so that workability can be improved.

Therein, noises might be produced by use of semiconductor relays such as SSR (Solid State Relay) as relays that are used for the header-unit inside communication lines 35 and the header-unit outside communication lines 36 because the communication lines 34, 35 have a long total length between 5 m and 20 m. In the embodiment, therefore, reduction in the noises is pursued with use of mechanical relays.

The temperature regulation system operates as follows.

In the heating operation, the refrigerant discharged from the compressor 4 passes through the four-way valve 5 and flows into the plate-type water heat exchanger 9. That is, the refrigerant having a high temperature and a high pressure is supplied to the plate-type water heat exchanger 9. The refrigerant condensed and having a low temperature and a high pressure as a result of heat exchange with the water in the plate-type water heat exchanger 9 is expanded to be decompressed by the electric expansion valve 7, absorbs heat from outdoor air so as to be evaporated in the outdoor heat exchanger 6, thereafter passes through the four-way valve 5 and the accumulator 8, and returns to the compressor 4. Then the water flowing through the plate-type water heat exchanger 9 is turned into hot water by the heat exchange with the refrigerant and flows toward the first and second floor cooling/heating panels 27 and 28.

Once the temperatures of the first and second floor cooling/heating panel 27 and 28 are set by communication from the remote control 32 in such heating operation, the controller 14 controls on-off operation for the first and second thermal valves 23 and 24 in cooperation with the outdoor control device 13 of the outdoor unit 1 so that the first and second floor cooling/heating panel 27 and 28 have the preset temperatures.

In the cooling operation, the refrigerant discharged from the compressor 4 passes through the four-way valve 5, is supplied to the outdoor heat exchanger 6, and is condensed in process of heat exchange with the outdoor air. The condensed refrigerant is decompressed by the electric expansion valve 7 and flows into the plate-type water heat exchanger 9. That is, the refrigerant having a low temperature and a low pressure is supplied to the plate-type water heat exchanger 9. The refrigerant having absorbed heat from the water and having been evaporated in the plate-type water heat exchanger 9 passes through the four-way valve 5 and the accumulator 8 and returns to the compressor 4. Then the water flowing through the plate-type water heat exchanger 9 is turned into cold water by heat exchange with the refrigerant and flows toward the first and second floor cooling/heating panels 27 and 28.

Once the temperatures of the first and second floor cooling/heating panel 27 and 28 are set by communication from the remote control 32 in such cooling operation, the controller 14 controls the on-off operation for the first and second thermal valves 23 and 24 in cooperation with the outdoor control device 13 of the outdoor unit 1 so that the first and second floor cooling/heating panel 27 and 28 have the setting temperatures.

In the embodiment, the water unit 2 is installed outdoors and the header unit 3 is installed indoors as described above. The supply header 21 to which the first through fourth thermal valves 23 through 26 are connected and the return header 22 are provided in the header unit 3. On the other hand, the controller 14 that exerts on-off control over the first through fourth thermal valves 23 through 26 is provided in the water unit 2.

Accordingly, supply of the hot water or the cold water from the water unit 2 to the first through fourth thermal valves 23 through 26 has only to be carried out solely through one system to a connection port 21a of the supply header 21. Similarly, return of the water from the first through fourth thermal valves 23 through 26 to the water unit 2 has only to be carried out solely through one system from a connection port 22a of the return header 22.

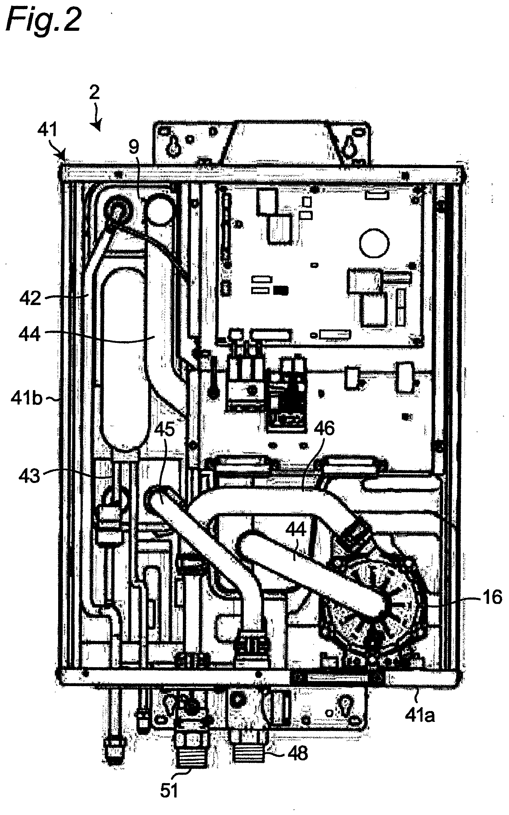

Fig. 2 is a representation illustrating an overall configuration of the water unit 2. The water unit 2 includes a parallelepiped casing 41, the circulation pump 16 that is attached and fixed to a bottom frame 41a of the casing 41, and the plate-type water heat exchanger 9 placed adjacent to a side face frame 41b of the casing 41.

Connected to the plate-type water heat exchanger 9 are a first refrigerant pipe 42 for supplying or discharging the refrigerant from the compressor 4 and a second refrigerant pipe 43 for discharging or supplying the refrigerant. Further connected to the plate-type water heat exchanger 9 are one end of a first water feeding pipe 44 for feeding the water to the circulation pump 16 and one end of a second water feeding pipe 45 for returning the water from the return header 22.

The other end of the first water feeding pipe 44 is connected to a suction port of the circulation pump 16 and one end of a discharge pipe 46 is connected to a discharge port of the circulation pump 16. A return water port 48 is connected to the other end of the second water feeding pipe 45. A supply water port 51 is connected to the other end of the discharge pipe 46.

In the embodiment, the supply of the hot water or the cold water from the water unit 2 to the first through fourth thermal valves 23 through 26 is thus carried out through one first water pipe 52 that makes connection between the supply water port 51 of the water unit 2 and the connection port 21a of the supply header 21 as illustrated in Fig. 1. The return of the water from the first and second floor cooling/heating panels 27 and 28 to the water unit 2 is carried out through one second water pipe 53 that makes connection between the connection port 22a of the return header 22 and the return water port 48 of the water unit 2.

In the construction of the outdoor unit 1 and the water unit 2, therefore, two holes through which the two water pipes, namely, the first water pipe 52 for supply and the second water pipe 53 for return are to be respectively passed or a hole through which the two water pipes are to be collectively passed and a small hole through which the thin communication line 33 that makes the connection between the remote control 32 and the controller 14 of the water unit 2 is to be passed have only to be pierced in a wall of a building, so that improvement in the workability and reduction in costs can be attained. In addition, appearance of the building can substantially be improved. Even in a configuration in which one hole is used both as the hole through which the two water pipes 52 and 53 are to be collectively passed and the hole through which the communication line 33 is to be passed, a diameter of the hole pierced in the wall of the building can be decreased in comparison with a configuration in which the first through fourth thermal valves 23 through 26 are installed outdoors. Accordingly, the workability and the appearance of the building can be improved.

Furthermore, the connection between the controller 14 in the water unit 2 and the first through fourth thermal valves 23 through 26 in the header unit 3 is made by the header-unit inside communication lines 35 and the header-unit outside communication lines 36 with the relay terminal 34 provided in the header box between. In the construction of the outdoor unit 1 and the water unit 2, therefore, there is no need for complicated work in which the header-unit-outside communication lines 36 are respectively and directly connected to the drive units for the first through fourth thermal valves 23 through 26, so that the workability can further be improved.

As the relays that are used for the indoor-side communication lines 35 and the outdoor-side communication lines 36, the mechanical relays that resist generating noises are used rather than semiconductor relays that are prone to generate noises. Thus the reduction in the noises can be pursued even if the communication lines 34 and 35 have a long total length between 5 m and 20 m.

Hereinbelow, a modification to Fig. 1 will be described.

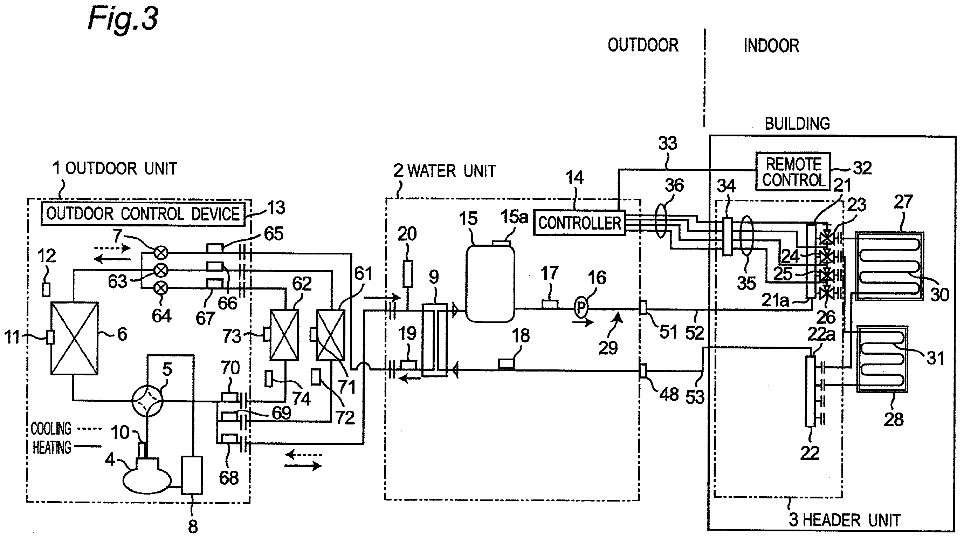

Fig. 3 is a representation illustrating a schematic configuration of a temperature regulation system that is further capable of cooling and heating inside of rooms. Members in Fig. 3 that are the same as those in Fig. 1 are provided with the same reference characters and detailed description thereon is omitted.

The modification includes first and second indoor heat exchangers 61 and 62 connected to the outdoor unit 1, in addition to the outdoor unit 1, the water unit 2 connected to the outdoor unit 1, and the header unit 3 connected to the water unit 2. The first indoor heat exchanger 61 has one end connected through a first electric expansion valve 63 to the outdoor heat exchanger 6 and has the other end connected to the four-way valve 5. The second indoor heat exchanger 62 has one end connected through a second electric expansion valve 64 to the outdoor heat exchanger 6 and has the other end connected to the four-way valve 5.

The modification further includes a fourth temperature sensor 65 that detects a temperature of the refrigerant between the electric expansion valve 7 and the plate-type water heat exchanger 9, a fifth temperature sensor 66 that detects a temperature of the refrigerant between the first electric expansion valve 63 and the first indoor heat exchanger 61, and a sixth temperature sensor 67 that detects a temperature of the refrigerant between the second electric expansion valve 64 and the second indoor heat exchanger 62.

The modification further includes a seventh temperature sensor 68 that detects a temperature of the refrigerant between the four-way valve 5 and the plate-type water heat exchanger 9, an eighth temperature sensor 69 that detects a temperature of the refrigerant between the four-way valve 5 and the first indoor heat exchanger 61, and a ninth temperature sensor 70 that detects a temperature of the refrigerant between the four-way valve 5 and the second indoor heat exchanger 62.

A tenth temperature sensor 71 that detects a temperature of the refrigerant in the first indoor heat exchanger 61 is attached to the first indoor heat exchanger 61. An eleventh temperature sensor 72 that detects a temperature of a room is provided adjacent to the first indoor heat exchanger 61. Similarly, a twelfth temperature sensor 73 that detects a temperature of the refrigerant in the second indoor heat exchanger 62 is attached to the second indoor heat exchanger 62. A thirteenth temperature sensor 74 that detects a temperature of a room is provided adjacent to the second indoor heat exchanger 62.

Based on detected values from the temperature sensors 10 through 12 and 65 through 74, the outdoor control device 13 controls the inverter (not illustrated) of the compressor 4 and controls the opening of the electric expansion valve 7 and openings of the first and second electric expansion valves 63 and 64 so that the heat exchange efficiency of the plate-type water heat exchanger 9 and heat exchange efficiencies of the first and second indoor heat exchangers 61 and 62 are optimized.

The temperature regulation system operates as follows.

In heating operation, the refrigerant discharged from the compressor 4 passes through the four-way valve 5 and then a portion of the refrigerant flows into the plate-type water heat exchanger 9 while the remaining portion of the refrigerant flows into the first and second indoor heat exchangers 61 and 62. The refrigerant condensed as a result of heat exchange with indoor air in the first and second indoor heat exchangers 61 and 62 is expanded to be decompressed by the first and second electric expansion valves 63 and 64, absorbs heat from outdoor air so as to be evaporated in the outdoor heat exchanger 6, thereafter passes through the four-way valve 5 and the accumulator 8, and returns to the compressor 4.

Operations on a side of the water unit 2 including the plate-type water heat exchanger 9 and on a side of the header unit 3 are as described above for Fig. 1.

In cooling operation, the refrigerant discharged from the compressor 4 passes through the four-way valve 5, is supplied to the outdoor heat exchanger 6, and is condensed in process of heat exchange with the outdoor air. A portion of the condensed refrigerant is decompressed by the electric expansion valve 7 and flows into the plate-type water heat exchanger 9, while the remaining portion of the condensed refrigerant is decompressed by the first and second electric expansion valves 63 and 64 and flows into the first and second indoor heat exchangers 61 and 62. The refrigerant having absorbed heat from the indoor air and having been evaporated in the first and second indoor heat exchangers 61 and 62 passes through the four-way valve 5 and the accumulator 8 and returns to the compressor 4.

The operations on the side of the water unit 2 including the plate-type water heat exchanger 9 and on the side of the header unit 3 are as described above for Fig. 1.

According to the modification, cooling/heating of inside of the rooms by the first and second indoor heat exchangers 61 and 62 and floor cooling/heating by the plate-type water heat exchanger 9 thus can be performed in parallel.

Though the outdoor unit 1 and the water unit 2 are separately configured in the embodiment and the modification thereto, there is no harm in integrally configuring the outdoor unit 1 and the water unit 2. The latter configuration removes necessity of plumbing and cabling work between the outdoor unit 1 and the water unit 2 and thus further improvement in the workability can be pursued.

Though any specific site of installation of the header unit 3 including the supply header 21, the return header 22, the first through fourth thermal valves 23 through 26, and the relay terminal 34 has not been elucidated for the embodiment and the modification thereto, the header unit 3 is preferably installed under either of floors where the first and second floor cooling/heating panels 27 and 28 connected to the first through fourth thermal valves 23 through 26 and the return header 22 are installed. In such a configuration, the inside of the rooms can be made neat by shortening of piping for connection of the first and second thermal valves 23 and 24 and the return header 22 to the first and second floor cooling/heating panels 27 and 28 and by elimination of the header unit 3 from the inside of the rooms.

In the embodiment and the modification thereto, the first through fourth thermal valves 23 through 26 are connected to the supply header 21 while the water outlets of the first and second floor cooling/heating panels 27 and 28 are connected to the return header 22. The invention, however, is not limited thereto and there is no harm in connecting the water inlets of the first and second floor cooling/heating panels 27 and 28 to the supply header 21 and connecting the first through fourth thermal valves 23 through 26 to the return header 22.

Subsequently, another modification different from the modification illustrated in Fig. 3 will be described.

In the embodiment and the modification thereto, the water unit 2 is installed outdoors. The water unit 2, however, is not necessarily installed outdoors. In cold climates and the like, for instance, the water unit 2 can be installed in a parking space, a basement, a closet, or the like, for instance, which is separated by walls from the rooms in the building where the first and second floor cooling/heating panels 27 and 28 are installed in order that the return water which flows from the first and second floor cooling/heating panels 27 and 28 to the water unit 2 through the second water pipe 53 in the water circuit 29 may be prevented from freezing.

In the construction of the outdoor unit 1 and the water unit 2 in such a configuration as well, two holes through which two refrigerant pipes, namely, a refrigerant channel connecting the electric expansion valve 7 and the plate-type water heat exchanger 9 and a refrigerant channel connecting the four-way valve 5 and the plate-type water heat exchanger 9 are to be respectively passed or a hole through which the two refrigerant pipes are to be collectively passed has only to be pierced in a wall of the building, so that the improvement in the workability and the reduction in the costs can be attained. In addition, the appearance of the building can substantially be improved.

Furthermore, two holes through which the two water pipes, namely, the first water pipe 52 for supply and the second water pipe 53 for return are to be respectively passed or a hole through which the two water pipes are to be collectively passed and a small hole through which the thin communication line 33 that makes the connection between the remote control 32 and the controller 14 of the water unit 2 is to be passed have only to be pierced in walls that provide partition between the rooms where the first and second floor cooling/heating panels 27 and 28 are installed and the room where the water unit 2 is installed, so that the improvement in the workability and the reduction in the costs can be attained. In addition, appearance of the walls that provide the partition between the rooms can substantially be improved.

In the embodiment and the modifications thereto, at least one of the floor cooling/heating panels 27 and 28 may be replaced by heat exchange terminals such as ceiling cooling/heating panels, ceiling cooling panels, ceiling heating panels, wall cooling/heating panels, wall cooling panels, wall heating panels, and indoor installed radiators. That is, heat exchange terminals such as ceiling cooling/heating panels, ceiling cooling panels, ceiling heating panels, wall cooling/heating panels, wall cooling panels, wall heating panels, and indoor installed radiators can be enumerated as another example of the specified supply destinations.

### REFERENCE SIGNS LIST

1 outdoor unit
2 water unit
3 header unit
4 compressor
5 four-way valve
6 outdoor heat exchanger
7 electric expansion valve
9 plate-type water heat exchanger
13 outdoor control device
14 controller
15 expansion tank
16 circulation pump
21 supply header
22 return header
23 through 26 first through fourth thermal valves
27, 28 first and second floor cooling/heating panels
29 water circuit
32 remote control
33 communication line
34 relay terminal
35 header-unit inside communication lines
36 header-unit outside communication lines
44, 45 first and second water feeding pipes
46 discharge pipe
48 return water port
51 supply water port
52, 53 first and second water pipes
61, 62 first and second indoor heat exchangers
63, 64 first and second electric expansion valves

## Claims

1. A temperature regulation system comprising:
a water unit (2) that is configured to produce hot water or cold water and that includes a controller (14),
headers (21, 22) that are connected to the water unit (2) through water pipes (52, 53) that are configured to guide the hot water or the cold water produced by the water unit (2) to specified supply destinations (27, 28) and that are configured to guide return water produced in the specified supply destinations (27, 28) to the water unit (2), and
a plurality of thermal valves (23 through 26) that are connected to the header (21),
**characterized in that** the water unit (2) is placed opposite to the headers (21, 22) with respect to walls for forming rooms in a building, and
wherein the controller (14) is connected to the thermal valves (23 through 26) through communication lines (35, 36) and is configured to control opening-closing operations of the thermal valves (23 through 26),
wherein the water unit (2) is installed outdoors or outside the rooms and wherein the headers (21, 22) and the plurality of thermal valves (23 through 26) are installed indoors,
wherein the temperature regulation system further comprises a relay terminal (34) that is provided in a header unit (3) including the headers (21, 22) and the thermal valves (23 through 26) and that intermediates the communication lines (35, 36),
wherein the communication lines (35, 36) are made of header-unit outside communication lines (36) that are mainly placed outside the header unit (3) and header-unit inside communication lines (35) that are placed inside the header unit (3), and
wherein the header-unit outside communication lines (36) are connected to the header-unit inside communication lines (35) through the relay terminal (34).

2. The temperature regulation system as claimed in Claim 1,
further comprising mechanical relays connected to the communication lines (35, 36).

3. The temperature regulation system as claimed in Claim 1 or 2,
wherein the headers (21, 22) and the plurality of thermal valves (23 through 26) are installed under indoor floors.

4. The temperature regulation system as claimed in any one of Claims 1 through 3,
further comprising a heat source unit (1) that is configured to produce heating medium having a high temperature or heating medium having a low temperature and that is configured to supply the heating medium to the water unit (2),
wherein the water unit (2) is configured integrally with the heat source unit (1).

## Patentansprüche

1. Temperaturregelungssystem, umfassend:
eine Wassereinheit (2), die konfiguriert ist, um Heißwasser oder Kaltwasser zu produzieren und die eine Steuerung (14) enthält,
Verteiler (21, 22), die durch Wasserrohre (52, 53), die konfiguriert sind, um das Heißwasser oder das Kaltwasser, das durch die Wassereinheit (2) produziert wird, zu bestimmten Versorgungszielen (27, 28) zu führen, und die konfiguriert sind, um Rücklaufwasser, das in den bestimmten Versorgungszielen (27, 28) produziert wird, zur Wassereinheit (2) zu führen, mit der Wassereinheit (2) verbunden sind, und
eine Vielzahl von Thermoventilen (23 bis 26), die mit dem Verteiler (21) verbunden sind,
**dadurch gekennzeichnet, dass** die Wassereinheit (2) gegenüber den Verteilern (21, 22) in Bezug auf Wände zum Bilden von Räumen in einem Gebäude platziert ist, und
wobei die Steuerung (14) mit den Thermoventilen (23 bis 26) durch Verbindungsleitungen (35, 36) verbunden ist und konfiguriert ist, um Öffnungs-Schließbetriebe der Thermoventile (23 bis 26) zu steuern,
wobei die Wassereinheit (2) im Freien oder außerhalb der Räume installiert ist und wobei die Verteiler (21, 22) und die Vielzahl von Thermoventilen (23 bis 26) in Innenräumen installiert sind,
wobei das Temperaturregelungssystem weiter einen Relaisanschluss (34) umfasst, der in einer Verteilereinheit (3) bereitgestellt ist, die die Verteiler (21, 22) und die Thermoventile (23 bis 26) enthält, und der zwischen den Verbindungsleitungen (35, 36) liegt,
wobei die Verbindungsleitungen (35, 36) aus Verteilereinheit-Außenverbindungsleitungen (36), die hauptsächlich außerhalb der Verteilereinheit (3) platziert sind, und Verteilereinheit-Innenverbindungsleitungen (35), die innerhalb der Verteilereinheit (3) platziert sind, hergestellt sind und
wobei die Verteilereinheit-Außenverbindungsleitungen (36) mit den Verteilereinheit-Innenverbindungsleitungen (35) durch den Relaisanschluss (34) verbunden sind.

2. Temperaturregelungssystem nach Anspruch 1,
weiter umfassend mechanische Relais, die mit den Verbindungsleitungen (35, 36) verbunden sind.

3. Temperaturregelungssystem nach Anspruch 1 oder 2,
wobei die Verteiler (21, 22) und die Vielzahl von Thermoventilen (23 bis 26) unter Innenraumböden installiert sind.

4. Temperaturregelungssystem nach einem der Ansprüche 1 bis 3,
weiter umfassend eine Wärmequelleneinheit (1), die konfiguriert ist, um ein Heizmedium, das eine hohe Temperatur aufweist, oder ein Heizmedium, das eine niedrige Temperatur aufweist, zu produzieren, und die konfiguriert ist, um das Heizmedium der Wassereinheit (2) zuzuleiten,
wobei die Wassereinheit (2) integral mit der Wärmequelleneinheit (1) konfiguriert ist.

## Revendications

1. Système de régulation de température comprenant :
une unité d'alimentation en eau (2) qui est configurée pour produire de l'eau chaude ou de l'eau froide et qui comprend un régulateur (14),
des collecteurs (21, 22) qui sont raccordés à l'unité d'alimentation en eau (2) via des tuyaux d'alimentation en eau (52, 53) qui sont configurés pour guider l'eau chaude ou l'eau froide produite par l'unité d'alimentation en eau (2) à des destinations d'alimentation spécifiées (27, 28) et qui sont configurés pour guider l'eau de retour produite dans les destinations d'alimentation spécifiées (27, 28) à l'unité d'alimentation en eau (2) et
une pluralité de vannes thermiques (23 à 26) qui sont raccordées au collecteur (21),
**caractérisé en ce que** l'unité d'alimentation en eau (2) est placée à l'opposé des collecteurs (21, 22) par rapport aux parois pour former des pièces dans un bâtiment, et
dans lequel le régulateur (14) est raccordé aux vannes thermiques (23 à 26) via des lignes de communication (35, 36) et est configuré pour commander des opérations d'ouverture-fermeture des vannes thermiques (23 à 26),
dans lequel l'unité d'alimentation en eau (2) est installée à l'extérieur ou en dehors des pièces et dans lequel les collecteurs (21, 22) et la pluralité de vannes thermiques (23 à 26) sont installés à l'intérieur,
dans lequel le système de régulation de température comprend en outre un terminal de relais (34) qui est situé dans une unité collectrice (3) comprenant les collecteurs (21, 22) et les vannes thermiques (23 à 26) et qui est disposé de manière intermédiaire entre les lignes de communication (35, 36),
dans lequel les lignes de communication (35, 36) sont constituées de lignes de communication (36) extérieures à l'unité collectrice, qui sont placées principalement à l'extérieur de l'unité collectrice (3) et de lignes de communication (35) situées à l'intérieur de l'unité collectrice, qui sont placées à l'intérieur de l'unité collectrice (3) et
dans lequel les lignes de communication (36) extérieures à l'unité collectrice sont connectées aux lignes de communication (35) situées à l'intérieur de l'unité collectrice via le terminal de relais (34).

2. Système de régulation de température selon la revendication 1,
comprenant en outre des relais mécaniques connectés aux lignes de communication (35, 36).

3. Système de régulation de température selon la revendication 1 ou 2,
dans lequel les collecteurs (21, 22) et la pluralité de vannes thermiques (23 à 26) sont installés en dessous de planchers intérieurs.

4. Système de régulation de température selon l'une quelconque des revendications 1 à 3,
comprenant en outre une unité de source de chaleur (1) qui est configurée pour produire un agent de chauffage ayant une température élevée ou un support de chauffage ayant une température basse et qui est configurée pour fournir l'agent de chauffage à l'unité d'alimentation en eau (2),
dans lequel l'unité d'alimentation en eau (2) est configurée d'un seul tenant avec l'unité de source de chaleur (1).
